# EUROPÄISCHE PATENTSCHRIFT

(11) **EP 1 868 851 B1**
(45) Veröffentlichungstag und Bekanntmachung des Hinweises auf die Patenterteilung: **10.07.2013**
(21) Anmeldenummer: 06725018.3
(22) Anmeldetag: 13.03.2006
(51) Int. Cl.: B60R 21/00, B60T 8/17, B62D 15/02, B60K 28/16, B60W 40/10, B62D 6/00

(54) **PLAUSIBILISIERUNG VON SENSORSIGNALEN IM FALLE EINER KOLLISION**
CALCULATION OF THE PLAUSIBILITY OF SENSOR SIGNALS IN THE EVENT OF A COLLISION
CONTROLE DE RESEMBLANCE DE SIGNAUX DE CAPTEURS EN CAS DE COLLISION

(30) Priorität: 07.04.2005 DE 102005016009
(43) Veröffentlichungstag der Anmeldung: 26.12.2007
(73) Patentinhaber: ROBERT BOSCH GMBH, 70442 Stuttgart (DE)
(72) Erfinder: EWERHART, Frank, 74189 Weinsberg (DE); MARCHTHALER, Reiner, 73333 Gingen (DE); LICH, Thomas, 71409 Schwaikheim (DE); KROENINGER, Mario, 77815 Buehl (DE); STABREY, Stephan, 70469 Stuttgart (DE)
(86) Internationale Anmeldenummer: PCT/EP2006/060646
(87) Internationale Veröffentlichungsnummer: WO 2006/106025

(56) Entgegenhaltungen:
- WO-A-02/20314
- US-B1- 6 295 495

## Beschreibung

### Stand der Technik

Die Erfindung betrifft ein Verfahren zum Plausibilisieren von Sensorsignalen eines Fahrzeugsystems gemäß dem Oberbegriff des Patentanspruchs 1 sowie eine entsprechende Vorrichtung gemäß dem Oberbegriff des Patentanspruchs 7.

Moderne Fahrzeuge sind üblicherweise mit einer Vielzahl von Einrichtungen ausgestattet, die regelnd oder steuernd in den Fahrbetrieb eingreifen. Hierzu zählen insbesondere Fahrdynamikregelungssysteme (z. B. ESP), automatische Bremssysteme (z. B. ABS), Fahrerassistenzsysteme (z. B. ACC), Rückhaltesysteme (z. B. Airbag-Systeme) sowie verschiedene Mehrwert-Funktionen wie z. B. ein automatisches Kurvenlicht oder eine Berg-Anfahrhilfe (z.B. HHC). Jedes der Systeme nutzt Sensoren, deren Signale gelesen und verarbeitet werden und auf deren Grundlage ein Steuer- oder Regelvorgang durchgeführt wird. Um Fehlauslösungen der Systeme zu vermeiden, werden die Sensorsignale üblicherweise gefiltert und einer Plausibilitätsprüfung unterzogen. Auf diese Weise wird sichergestellt, dass das System nur plausible Signale berücksichtigt. Bei unplausiblen Signalwerten reagieren bekannte Systeme i. d. R. mit Funktionseinschränkungen (Rückfallebene) oder im Extremfall mit dem vollständigen Abschalten des Systems. Die Signalüberwachung findet üblicherweise im Steuergerät des jeweiligen Fahrzeugsystems statt.

Im Rahmen der Plausibilisierung wird i. A. zumindest eine Einzelsignal-überwachung durchgeführt, bei der der Wertebereich und/oder der Gradient der Signale überprüft, sowie eventuell auftretende Sensormeldungen ausgewertet werden. Es ist auch bekannt, die Sensorsignale mit geschätzten Werten zu vergleichen, die aus verschiedenen anderen Sensorsignalen berechnet wurden (sog. Modell-basierte Plausibilisierung).

Die bekannten Plausibilisierungsverfahren funktionieren im normalen Fahrbetrieb hinreichend gut. In fahrdynamischen Grenzsituationen, wie z. B. nach einer Kollision, können jedoch Signalwerte bzw. Signaländerungen auftreten, die den plausiblen Bereich weit überschreiten. Die betreffenden Sensorsignale werden dann als unplausibel eingestuft oder durch zu starke Filterung verfälscht. Dies kann dazu führen, dass das betreffende System in einen Rückfallmodus mit vermindertem Funktionsumfang schaltet oder sich selbst automatisch deaktiviert. Im Falle von sicherheitsrelevanten Systemen, wie z. B. einer Fahrdynamikregelung, kann es daher zu einer Verminderung der Fahrsicherheit kommen. Besonders kritisch ist dies bei versetzten Heckkollisionen oder versetzten Seitenkollisionen, bei denen ein großes Giermoment auf das Fahrzeug ausgeübt wird, mit dem das Fahrzeug schnell in Rotation versetzt wird. Ohne zusätzliche unterstützende Einrichtungen kann das Fahrzeug unter Umständen völlig außer Kontrolle geraten und Folgeunfälle verursachen, die bei hoher Geschwindigkeit schwere Folgen haben können.

### Offenbarung der Erfindung

Es ist daher die Aufgabe der vorliegenden Erfindung, die Funktion von Fahrzeugsystemen, insbesondere sicherheitsrelevanten Systemen, auch in fahrdynamischen Grenzsituationen, wie z. B. nach einer Kollision, sicherzustellen und gleichzeitig die Robustheit dieser Einrichtungen gegenüber Signalstörungen im Normalbetrieb nicht zu verschlechtern.

Gelöst wird diese Aufgabe gemäß der Erfindung durch den Patentanspruch 1 sowie im Patentanspruch 7 angegebenen Merkmale. Weitere Ausgestaltungen der Erfindung sind Gegenstand von Unteransprüchen.

Ein wesentlicher Gedanke der Erfindung besteht darin, den Signal-Plausibilitätsbereich im Falle einer Kollision zu vergrößern, um das betreffende Fahrzeugsystem in diesem Fall voll funktionsfähig zu halten. Gemäß der Erfindung wird der Fahrzustand des Fahrzeugs in Bezug auf eine Kollision überwacht und wenigstens ein Plausibilitätskriterium, wie z. B. ein vorgegebener Grenzwert für den Absolutwert oder die zulässige Signaländerung, modifiziert, wenn eine Kollision festgestellt wurde. Dies hat den wesentlichen Vorteil, dass die Funktion des übergeordneten Systems auch in Grenzsituationen erhalten bleibt und gleichzeitig die Funktion dieser Systeme im Normalbetrieb des Fahrzeugs nicht beeinträchtigt wird.

Typische Sensoren von Fahrzeugsystemen, deren Signale plausibilisiert werden, sind beispielsweise Gierraten-, Beschleunigungs-, Rad-Drehzahl-, Winkel- oder auch andere Sensoren.

Sofern das überwachte Sensorsignal vor der Plausibilisierung gefiltert wird, wird vorzugsweise wenigstens ein Filterparameter geändert, wenn eine Kollision erkannt wurde. Das betreffende Sensorsignal wird dadurch im Falle einer Kollision weniger stark gefiltert und somit weniger stark verfälscht.

Gemäß einer bevorzugten Ausführungsform der Erfindung wird der Fahrzustand des Fahrzeugs mittels Beschleunigungs- und/oder Drucksensoren in Bezug auf eine Kollision überwacht. Bei Fahrzeugen mit eingebautem Airbag-System werden vorzugsweise die Sensoren dieses Systems mitgenutzt.

Eine erfindungsgemäße Vorrichtung zur Plausibilisierung von Sensorsignalen umfasst vorzugsweise eine elektronische Einrichtung, wie z. B. ein Steuergerät mit einem Plausibilisierungsalgorithmus, die wenigstens ein Sensorsignal überwacht, sowie eine Sensorik zur Kollisionserkennung, deren Signal der elektronischen Einrichtung zugeführt wird. Im Falle einer Kollision wird, wie vorstehend beschrieben, der Plausibilitätsbereich erweitert, so dass auch höhere Signalwerte bzw. stärkere Signaländerungen als plausibel eingestuft werden.

Der Algorithmus zur Kollisionserkennung ist vorzugsweise im Airbag-Steuergerät integriert und übermittelt im Falle einer Kollision ein entsprechendes Kollisions-Signal an das Steuergerät des Fahrzeugsystems. Der Plausibilisierungs-algorithmus ist vorzugsweise im Steuergerät des Fahrzeugsystems integriert. Wahlweise könnte der Algorithmus zur Kollisionserkennung natürlich auch in einem anderen als dem Airbag-Steuergerät, z. B. auch im Steuergerät des Fahrzeugsystems integriert sein.

Die Plausibilitätskriterien oder Filterparameter werden gemäß einer ersten Ausführungsform der Erfindung um feste, vorgegebene Werte verändert. Wahlweise kann die Anpassung der Plausibilitätskriterien bzw. Filterparameter aber auch in Abhängigkeit von der Stärke und/oder dem Ort der Kollision durchgeführt werden. Im letzteren Fall umfasst die erfindungsgemäße Vorrichtung eine entsprechende Sensorik, mit der die Stärke und/oder der Ort der Kollision bestimmt werden kann. Bei einem Fahrzeug mit eingebautem Rückhaltesystem können hierzu ebenfalls die bereits bestehenden Sensoren des Rückhaltesystems genutzt werden.

Anstelle der Druck- oder Beschleunigungssensoren könnte alternativ oder zusätzlich z. B. auch ein Video-basiertes System (z. B. ein Fahrspurerkennungssystem), ein Radarsystem oder eine andere Umfeldsensorik zur Kollisionserkennung herangezogen werden.

### Kurze Beschreibung der Zeichnungen

Die Erfindung wird nachstehend anhand der beigefügten Zeichnungen beispielhaft näher erläutert. Es zeigen:
- Fig. 1: eine schematische Blockdarstellung eines Fahrer-Unterstützungssystems mit zugehöriger Sensorik und einer Einrichtung zur Plausibilisierung der Sensorsignale; und
- Fig. 2: die wesentlichen Verfahrensschritte eines Verfahrens zum Anpassen der Plausibilisierung und Filterung im Falle einer Kollision.

### Ausführungsformen der Erfindung

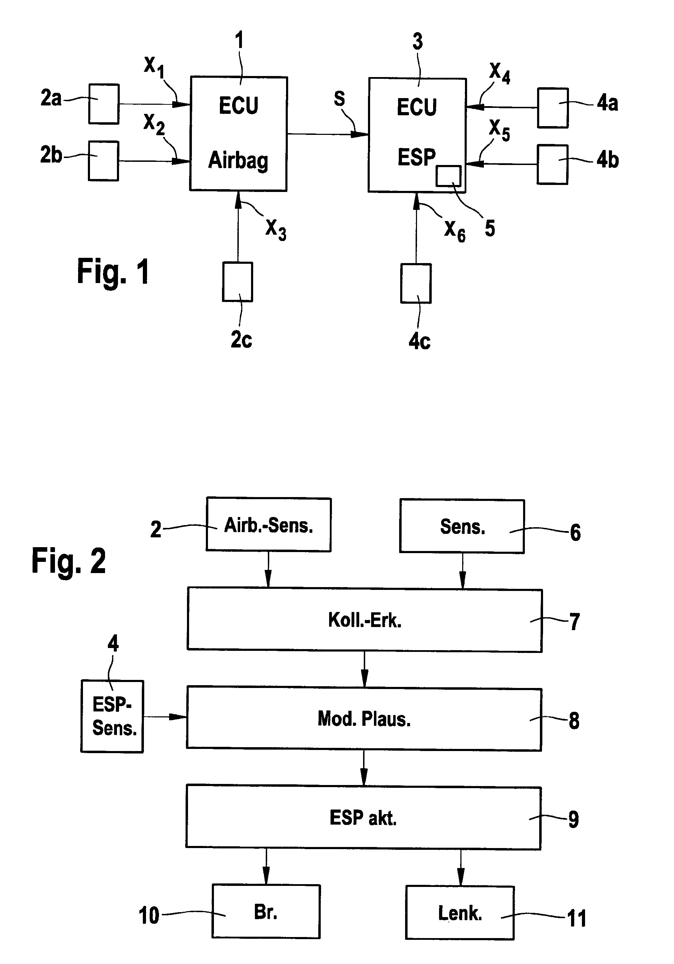

Fig. 1 zeigt eine schematische, stark vereinfachte Darstellung eines Rückhaltesystems (Airbag-System) 1,2a-2c und eines Fahrdynamik-Regelungssystems (ESP) 3, 4a-4c mit zugehörigen Sensoren 2a-2c bzw. 4a-4c.

Das Fahrdynamik-Regelungssystem (ESP) umfasst ein Steuergerät 3 mit einem Regel-Algorithmus, der in kritischen Fahrsituationen mittels zugehöriger Aktuatoren (nicht gezeigt) in den Fahrbetrieb eingreift. Der Stabilisierungseingriff erfolgt üblicherweise mit Hilfe des Bremssystems und/oder der Lenkung des Fahrzeugs. Bei den Sensoren 4a-4c kann es sich z. B. um Gierraten-, Beschleunigungs-, Rad-Drehzahl- und/oder Lenkwinkel-Sensoren handeln. Die Sensorsignale sind mit x₄-x₆ bezeichnet.

Das Airbag-System 1, 2a-2c umfasst ebenfalls ein Steuergerät 1 mit zugehörigen Sensoren 2a - 2c. Die Sensoren 2a - 2c können beispielsweise Beschleunigungs - und/oder Drucksensoren sein. Die Sensorsignale sind mit x₁-x₃ bezeichnet.

Um auf Signalstörungen der Sensorsignale x₄-x₆ reagieren zu können, überwacht das Fahrdynamik-Regelungssystem die Sensorsignale x₄-x₆ mittels eines Plausibilisierungs-Algorithmus 5. Im Rahmen der Plausibilisierung wird eine Einzelsignal-Überwachung durchgeführt, bei der insbesondere der Wertebereich und der Gradient der Signale x₄-x₆ überprüft, sowie eventuell auftretende SensorMeldungen ausgewertet werden. Dabei werden die Signale x₄-x₆ bzw. Signaländerungen mit entsprechenden Grenzwerten verglichen und je nach Ergebnis das betreffende Signal als plausibel bzw. nicht plausibel eingestuft. Im Falle nicht-plausibler Signale wird das Stabilisierungssystem 3,4 in einen Rückfallmodus mit verringertem Funktionsumfang geschaltet oder ggf. auch vollständig deaktiviert. Die Sensorsignale x₄-x₆ werden zusätzlich gefiltert, um das System robuster gegenüber Störungen zu machen.

Der Plausibilisierungsalgorithmus 5 arbeitet im normalen Fahrbetrieb in einem ersten Plausibilisierungsmodus und im Falle einer Kollision in einem zweiten Modus mit unterschiedlichen Plausibilitätskriterien. Dadurch bleibt die Funktionsfähigkeit des Fahrdynamik-Stabilisierungssystems auch nach einer Kollision voll erhalten und das Fahrzeug kann weiterhin automatisch stabilisiert werden.

Die beiden Steuergeräte 1,3 sind über eine Datenverbindung miteinander verbunden, über die das ESP-Steuergerät 3 eine Information S über eine mögliche Kollision vom Airbag-Steuergerät 1 erhält. Das Signal S kann im einfachsten Fall z. B. ein Kollisions-Flag, aber auch ein komplexeres Signal sein, das gegebenenfalls auch eine Information über Stärke und/oder Ort der Kollision enthalten kann.

Sobald eine Kollision erkannt wurde, sendet das Steuergerät 1 ein entsprechendes Signal S an das Steuergerät 3 des Fahrdynamik-Regelungssystems. Nach dem Empfang des Signals wird wenigstens ein Plausibilitätskriterium verändert, so dass sich der der plausible Bereich erweitert. Alternativ oder zusätzlich kann z. B. auch ein Filterparameter verändert werden. Wenn das Kollisions-Signal S eine Information über die Stärke und/oder den Ort der Kollision umfasst, können die Kriterien bzw. Parameter auch in Abhängigkeit von dieser Information verändert werden.

Fig. 2 zeigt die wesentlichen Verfahrenszustände bei einer Anpassung des Plausibilisierungs-Algorithmus 5 nach einer Kollision. Die Blöcke 2 und 6 repräsentieren Airbagsensoren 2 und andere Umfeldsensoren 6, wie z. B. ein Videosystem, mit denen der Fahrzustand in Hinblick auf eine Kollision überwacht wird. Im Falle einer Kollision wird diese vom Airbag-Steuergerät 1 erkannt und die Kollision gegebenenfalls bezüglich Stärke und/oder Aufprallort klassifiziert (Block 7). In Block 8 erfolgt die vorstehend genannte Anpassung der Plausibilisierung und/oder der Filterung. Die ESP-Sensoren sind hier in einem Block 4 zusammengefasst.

In Block 9 wird auch nach einer Kollision ein ESP-Stabilisierungseingriff ausgelöst, mit dem das Fahrzeug stabilisiert werden soll. Der Stabilisierungseingriff kann hier wahlweise mit Hilfe der Radbremsen 10 und/oder der Lenkung 11 durchgeführt werden. Das Fahrdynamik-Regelungssystem 3, 4 bleibt somit auch im Falle einer Kollision voll einsatzfähig.

## Patentansprüche

1. Verfahren zum Plausibilisieren von Sensorsignalen (xᵢ) eines Fahrzeugsystems (3, 4), bei dem die Sensorsignale (xᵢ) mittels eines entsprechenden Algorithmus (5) auf Einhaltung eines oder mehrerer Plausibilitätskriterien überprüft werden, **dadurch gekennzeichnet, dass** der Fahrzustand des Fahrzeugs in Bezug auf eine Kollision überwacht und wenigstens ein Plausibilitätskriterium geändert wird, wenn eine Kollision festgestellt wurde.

2. Verfahren nach Anspruch 1, **dadurch gekennzeichnet, dass** das Sensorsignal (xᵢ) vor der Plausibilisierung gefiltert wird und wenigstens ein Filterparameter geändert wird, wenn eine Kollision erkannt wurde.

3. Verfahren nach Anspruch 1 oder 2, **dadurch gekennzeichnet, dass** im Rahmen der Plausibilisierung der Wertebereich oder der Gradient eines Sensorsignals (xᵢ) überwacht wird.

4. Verfahren nach einem der vorhergehenden Ansprüche, **dadurch gekennzeichnet, dass** das überwachte Sensorsignal (xi) das Signal eines Gierraten-, Beschleunigungs-, Rad-, Drehzahl-, Winkel- oder eines anderen Sensors (4a-4c) ist.

5. Verfahren nach einem der vorhergehenden Ansprüche, **dadurch gekennzeichnet, dass** das Plausibilitätskriterium in Abhängigkeit von der Stärke und/oder dem Ort der Kollision geändert wird.

6. Verfahren nach einem der vorhergehenden Ansprüche, **dadurch gekennzeichnet, dass** der plausible Bereich im Falle einer Kollision erweitert wird.

7. Vorrichtung zum Plausibilisieren von Sensorsignalen (xᵢ) eines Fahrzeugsystems (3, 4), umfassend eine elektronische Einrichtung (3) mit einem Plausibilisierungs-Algorithmus (5), der wenigstens ein Sensorsignal (xᵢ) auf die Einhaltung eines vorgegebenen Plausibilitätskriteriums überprüft, **dadurch gekennzeichnet, dass** eine Sensorik (2) zur Kollisionsüberwachung vorgesehen ist, deren Ausgangssignale (xᵢ) von derselben oder einer anderen elektronischen Einrichtung (1,3) verarbeitet werden, und dass wenigstens ein Plausibilitätskriterium geändert wird, wenn eine Kollision festgestellt wurde.

8. Vorrichtung nach Anspruch 7, **dadurch gekennzeichnet, dass** die Sensorik (2) zur Kollisionsüberwachung einen Beschleunigungs- (2a) und/oder Drucksensor (2b) umfasst.

9. Vorrichtung nach Anspruch 7 oder 8, **dadurch gekennzeichnet, dass** die Sensorik (2) zur Kollisionsüberwachung die Stärke und/oder den Ort der Kollision erfassen kann.

10. Vorrichtung nach den Ansprüchen 7, 8 oder 9,
**dadurch gekennzeichnet, dass** die Sensoren (2a-2c) eines Airbagsystems als Sensoren zur Kollisionsüberwachung verwendet werden.

11. Vorrichtung nach einem der Ansprüche 7 bis 10, **dadurch gekennzeichnet, dass** als Sensoren (2a-2c) zur Kollisionsüberwachung Umfeldsensoren, insbesondere Video-, Radar-, Lidar- und/oder Ultraschallsensoren verwendet werden.

## Claims

1. Method for checking the plausibility of sensor signals (xᵢ) from a vehicle system (3, 4), in which the sensor signals (xᵢ) are checked for compliance with one or more plausibility criteria using a corresponding algorithm (5), **characterized in that** the driving state of the vehicle is monitored with respect to a collision and at least one plausibility criterion is changed if a collision has been detected.

2. Method according to Claim 1, **characterized in that** the sensor signal (xᵢ) is filtered before the plausibility check and at least one filter parameter is changed if a collision has been detected.

3. Method according to Claim 1 or 2, **characterized in that** the range of values or the gradient of a sensor signal (xᵢ) is monitored during the plausibility check.

4. Method according to one of the preceding claims, **characterized in that** the monitored sensor signal (xᵢ) is the signal from a yaw rate sensor, an acceleration sensor, a wheel sensor, a speed sensor, an angle sensor or another sensor (4a-4c).

5. Method according to one of the preceding claims, **characterized in that** the plausibility criterion is changed on the basis of the severity and/or the location of the collision.

6. Method according to one of the preceding claims, **characterized in that** the plausible range is extended in the case of a collision.

7. Apparatus for checking the plausibility of sensor signals (xᵢ) from a vehicle system (3, 4), comprising an electronic device (3) with a plausibility check algorithm (5) which checks at least one sensor signal (xᵢ) for compliance with a predefined plausibility criterion, **characterized in that** a sensor system (2) for collision monitoring is provided, the output signals (xᵢ) from which sensor system are processed by the same electronic device or by another electronic device (1, 3), and **in that** at least one plausibility criterion is changed if a collision has been detected.

8. Apparatus according to Claim 7, **characterized in that** the sensor system (2) for collision monitoring comprises an acceleration sensor (2a) and/or a pressure sensor (2b).

9. Apparatus according to Claim 7 or 8, **characterized in that** the sensor system (2) for collision monitoring can detect the severity and/or the location of the collision.

10. Apparatus according to Claim 7, 8 or 9, **characterized in that** the sensors (2a-2c) of an airbag system are used as the sensors for collision monitoring.

11. Apparatus according to one of Claims 7 to 10, **characterized in that** environmental sensors, in particular video, radar, lidar and/or ultrasonic sensors, are used as the sensors (2a-2c) for collision monitoring.

## Revendications

1. Procédé de plausibilisation de signaux (xᵢ) de détecteur d'un système (3, 4) pour véhicule, dans lequel les signaux (xᵢ) de détecteur sont vérifiés au moyen d'un algorithme (5) approprié en respectant un ou plusieurs critères de plausibilité,
**caractérisé en ce que**
l'état de roulage du véhicule est surveillé en termes de collisions et au moins un critère de plausibilité est modifié si une collision a été constatée.

2. Procédé selon la revendication 1, **caractérisé en ce que** le signal (xᵢ) de détecteur est filtré par la plausibilisation et **en ce qu'**au moins un paramètre de filtrage est modifié lorsqu'une collision a été détectée.

3. Procédé selon les revendications 1 ou 2, **caractérisé en ce que** la plage de valeurs ou le gradient d'un signal (xᵢ) de détecteur est surveillée dans le cadre de la plausibilisation.

4. Procédé selon l'une des revendications précédentes, **caractérisé en ce que** le signal (xᵢ) de détecteur surveillé est le signal d'un détecteur (4a-4c) de vitesse de lacet, d'accélération, de roue, de régime du moteur, d'angle ou d'un autre détecteur.

5. Procédé selon l'une des revendications précédentes, **caractérisé en ce que** le critère de plausibilité est modifié en fonction de l'intensité et/ou de l'emplacement de la collision.

6. Procédé selon l'une des revendications précédentes, **caractérisé en ce que** la plage plausible est élargie en cas de collision.

7. Dispositif de plausibilisation de signaux (xᵢ) de détecteur d'un système (3, 4) de véhicule, l'ensemble comportant un dispositif électronique (3) doté d'un algorithme de plausibilisation (5) qui vérifie si au moins un signal (xᵢ) de détecteur respecte un critère prédéterminé de plausibilité,
**caractérisé en ce que**
un ensemble (2) de détecteurs est prévu pour surveiller les collisions et ses signaux (xᵢ) de sortie sont traités par le même dispositif électronique (1, 3) ou par un autre dispositif électronique et **en ce qu'**au moins un critère de plausibilité est modifié si une collision a été constatée.

8. Dispositif selon la revendication 7, **caractérisé en ce que** l'ensemble (2) de détecteurs qui surveille les collisions comporte un détecteur d'accélération (2a) et/ou un détecteur de pression (2b).

9. Ensemble selon les revendications 7 ou 8, **caractérisé en ce que** l'ensemble (2) de détecteurs utilisé pour la surveillance des collisions peut détecter l'intensité et/ou l'emplacement de la collision.

10. Dispositif selon les revendications 7, 8 ou 9, **caractérisé en ce que** les détecteurs (2a-2c) d'un système d'airbag sont utilisés comme détecteurs de surveillance des collisions.

11. Ensemble selon l'une des revendications 7 à 10, **caractérisé en ce que** pour la surveillance des collisions, il utilise comme détecteurs (2a-2c) des sondes d'environnement, en particulier des sondes vidéo, radar, lidar et/ou à ultrasons.
